# EUROPEAN PATENT SPECIFICATION

(11) **EP 3 496 438 B1**
(45) Date of publication and mention of the grant of the patent: **26.02.2020**
(21) Application number: 16916070.2
(22) Date of filing: 19.09.2016
(51) Int. Cl.: H04W 8/26, H04L 29/12, H04W 4/70

(54) **PACKET TRANSMISSION METHOD, APPARATUS AND SYSTEM**
PAKETÜBERTRAGUNGSVERFAHREN, -VORRICHTUNG UND -SYSTEM
PROCÉDÉ, APPAREIL ET SYSTÈME D'ÉMISSION DE PAQUETS

(43) Date of publication of application: 12.06.2019
(73) Proprietor: Huawei Technologies Co., Ltd., Longgang District Shenzhen, Guangdong 518129 (CN)
(72) Inventor: ZHU, Fangyuan, Shenzhen Guangdong 518129 (CN); LI, Yan, Shenzhen Guangdong 518129 (CN)
(74) Representative: Gill Jennings & Every LLP
(86) International application number: PCT/CN2016/099378
(87) International publication number: WO 2018/049690

(56) References cited:
- WO-A1-2011/141834
- WO-A1-2015/113297
- CN-A- 101 047 631
- CN-A- 102 625 277
- CN-A- 103 581 892
- US-A1- 2013 301 611
- "3rd Generation Partnership Project; Technical Specification Group Services and System Aspects; Study on Architecture for Next Generation System (Release 14)", 3GPP STANDARD; 3GPP TR 23.799, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE, vol. SA WG2, no. V0.8.0, 13 September 2016 (2016-09-13), pages 1-422, XP051172426, [retrieved on 2016-09-13]
- "3rd Generation Partnership Project; Technical Specification Group Services and System Aspects; Study on architecture enhancements for Cellular Internet of Things (Release 13)", 3GPP DRAFT; 23720-D00, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE , 24 March 2016 (2016-03-24), XP051086108, Retrieved from the Internet: URL:http://www.3gpp.org/ftp/tsg_sa/WG2_Arc h/Latest_SA2_Specs/Rel-13/ [retrieved on 2016-03-24]

## Description

### TECHNICAL FIELD

The present invention relates to the field of communications technologies, and in particular, to a packet transmission method, an apparatus, and a packet transmission system.

### BACKGROUND

An SDS (small data service, small data service) is an important application in the cell-based NB-IoT (NarrowBand Internet of Things, Narrowband Internet of Things). In the small data service, a size of a packet from user equipment is relatively small and is usually less than 10 bytes; and packet sending frequency of the user equipment is relatively low, and the user equipment usually needs to report only one to four packets every day. The small data service may be specifically applied to scenarios such as smart metering, object tracing, smart home, and smart environmental monitoring.

Currently, before sending a packet of the small data service, the user equipment needs to first access a core network by using an access network node. A control node such as an MME (Mobility Management Entity, mobility management entity) in the core network needs to allocate information about a forwarding device, for example, an identifier and an IP (Internet Protocol, Internet Protocol) address of an SGW (Serving Gateway, serving gateway), to the user equipment. An interface between the access network node and the control node is in a connectionless state. Therefore, when subsequently sending the packet of the small data service, the user equipment further needs to add the information about the forwarding device to the packet in addition to a session identifier such as an identifier or a source IP address of the user equipment. In this way, the access network node that receives the packet can send the packet to the corresponding forwarding device based on the added information about the forwarding device. Finally, the forwarding device forwards the packet to a destination server that should receive the packet.

However, in the foregoing packet transmission process, when each user equipment sends each packet, each packet needs to carry information about a forwarding device that is allocated by the control node, otherwise the access network node cannot determine the forwarding device that is to send the packet. In addition, a size of the information about the forwarding device may be far greater than a size of service data in the packet of the small data service. In other words, each time the user equipment sends a packet, most occupied air interface resources are used to transmit the information about the forwarding device. This undoubtedly reduces utilization of the air interface resources.

US 2013/0301611 A1 describes a method and system for uplink-downlink transmission of data packets in a wireless cellular network, during idle state of User Equipment (UE) using connectionless transmission is disclosed. The method establishes Sl common bearer between a Radio Access Network (RAN) node and Serving Gateway (SGW) and S5 common bearer between the SGW and Packet Data Network Gateway (PGW). The method defines a modified Uu interface between the UE and the RAN node. The method appends data packets with UE Identifier (ID) and routing information as packet header information to independently route data packets through wireless cellular network in a self-sustainable manner using the established common bearers and the modified Uu interface.

### SUMMARY

Embodiments of the present invention provide a packet transmission method according to claim 1, an access network node according to claim 6, and a packet transmission system according to claim 7, so that an uplink packet can be successfully transmitted to a corresponding forwarding device without requiring user equipment to add information about the forwarding device to the packet, thereby improving utilization of an air interface resource in a small data service.

The following technical solutions are used in the embodiments of the present invention to achieve the foregoing objective.

According to a first example there is provided a packet transmission method, including: receiving, by an access network node, an uplink packet from user equipment, where the uplink packet includes first index information, and the first index information is used to search for a first forwarding device that is to forward the uplink packet; determining, by the access network node, the first forwarding device corresponding to the first index information; and sending the uplink packet to the first forwarding device. In other words, the access network node can determine the forwarding device that is to forward the uplink packet, provided that the user equipment adds index information (for example, the first index information) to the uplink packet. In addition, a size of the index information is usually small, and in a conventional packet transmission process, the index information usually also needs to be added to the uplink packet. For example, the index information may be an identifier of the user equipment. Therefore, compared with the existing packet transmission process, in the packet transmission method provided in this embodiment of the present invention, an uplink packet can be successfully transmitted to a corresponding forwarding device without requiring the user equipment to directly add information about the forwarding device to the packet, thereby improving utilization of an air interface resource in the small data service.

It should be noted that, the small data service in this embodiment of the present invention is usually a service in which a quantity of bytes of a payload of a packet transmitted each time is relatively small, for example, ranges from 1 byte to 1 kilobyte, packet sending frequency is relatively low, and a packet is usually transmitted in a non-response single-direction transmission manner. This is not described in detail again in the following embodiments.

In a possible design manner, the access network node stores a correspondence between index information and a forwarding device. In this case, the determining, by the access network node, the first forwarding device corresponding to the first index information includes: determining, by the access network node based on the correspondence between index information and a forwarding device, the first forwarding device corresponding to the first index information.

In a possible design manner, the first index information includes a session identifier of the user equipment, and the session identifier includes an identifier of the user equipment or a source IP address of the user equipment; and the correspondence between index information and a forwarding device is specifically a correspondence between a session identifier number segment and a forwarding device. In this case, the determining, by the access network node, the first forwarding device corresponding to the first index information includes: determining, by the access network node, a target session identifier number segment to which the session identifier belongs, where the target session identifier number segment is any session identifier number segment in the correspondence between a session identifier number segment and a forwarding device; and then determining, by the access network node based on the correspondence between a session identifier number segment and a forwarding device, the first forwarding device corresponding to the target session identifier number segment. In this way, each time any user equipment subsequently sends an uplink packet to the access network node, the access network node may determine, in the correspondence between a session identifier number segment and a forwarding device based on a session identifier carried in the uplink packet, a forwarding device corresponding to the session identifier, without requiring the user equipment to add any information about the forwarding device to the uplink packet, thereby improving utilization of an air interface resource in the small data service.

In a possible design manner, if the session identifier does not belong to any session identifier number segment in the correspondence between a session identifier number segment and a forwarding device, the method further includes: sending, by the access network node, a re-attach indication to the user equipment, so that the user equipment obtains a new session identifier for sending the uplink packet; and determining, by the access network node, a second forwarding device corresponding to the new session identifier, and sending the uplink packet to the second forwarding device, where the second forwarding device is the same as or different from the first forwarding device.

Alternatively, in a possible design manner, the first index information further includes a service type of the uplink packet; and the correspondence between index information and a forwarding device is a correspondence between a service type and a forwarding device. In this case, the determining, by the access network node, the first forwarding device corresponding to the first index information includes: determining, by the access network node based on the correspondence between a service type and a forwarding device, the first forwarding device corresponding to the service type of the uplink packet.

In a possible design manner, before the determining, by the access network node based on the correspondence between index information and a forwarding device, the first forwarding device corresponding to the first index information, the method further includes: establishing, by the access network node, an interface connection to a control device; and receiving, by the access network node, the correspondence between index information and a forwarding device that is from the control node through the interface connection.

In a possible design manner, the method further includes: receiving, by the access network node, an update instruction from the control node, where the update instruction carries a to-be-updated correspondence between index information and a forwarding device; and updating, by the access network node, the correspondence between index information and a forwarding device based on the update instruction, to adjust a load relationship between forwarding devices.

In a possible design manner, the determining, by the access network node, the first forwarding device corresponding to the first index information includes: sending, by the access network node, the first index information to a third-party server, so that the third-party server determines the first forwarding device corresponding to the first index information, where the third-party server stores at least a correspondence between the first index information and the first forwarding device. To be specific, each time the user equipment sends an uplink packet to the access network node, the uplink packet does not need to carry any information about a forwarding device. Instead, the access network node interacts with the third-party server, to determine the corresponding first forwarding device based on first index information in the uplink packet, thereby improving utilization of an air interface resource in the small data service.

In a possible design manner, before the receiving, by an access network node, an uplink packet from user equipment, the method further includes: receiving, by the access network node, an attach request or a session establishment request that is from the user equipment; and sending, by the access network node, the attach request or the session establishment request to the control node, so that the control node allocates the session identifier to the user equipment.

According to a second example there is providedan access network node, including: a receiving unit, configured to receive an uplink packet from user equipment, where the uplink packet includes first index information, and the first index information is used to search for a first forwarding device that is to forward the uplink packet; a determining unit, configured to determine the first forwarding device corresponding to the first index information; and a sending unit, configured to send the uplink packet to the first forwarding device.

In a possible design manner, the access network node stores a correspondence between index information and a forwarding device; and the determining unit is specifically configured to determine, based on the correspondence between index information and a forwarding device, the first forwarding device corresponding to the first index information.

In a possible design manner, the first index information includes a session identifier of the user equipment, and the session identifier includes an identifier of the user equipment or a source IP address of the user equipment; the correspondence between index information and a forwarding device is a correspondence between a session identifier number segment and a forwarding device; and the determining unit is specifically configured to: determine a target session identifier number segment to which the session identifier belongs, where the target session identifier number segment is any session identifier number segment in the correspondence between a session identifier number segment and a forwarding device; and determine, based on the correspondence between a session identifier number segment and a forwarding device, the first forwarding device corresponding to the target session identifier number segment.

In a possible design manner, if the session identifier does not belong to any session identifier number segment in the correspondence between a session identifier number segment and a forwarding device, the sending unit is further configured to send a re-attach indication to the user equipment, so that the user equipment obtains a new session identifier for sending the uplink packet; the determining unit is further configured to determine a second forwarding device corresponding to the new session identifier, where the second forwarding device is the same as or different from the first forwarding device; and the sending unit is further configured to send the uplink packet to the second forwarding device.

In a possible design manner, the first index information further includes a service type of the uplink packet; the correspondence between index information and a forwarding device is a correspondence between a service type and a forwarding device; and the determining unit is specifically configured to determine, based on the correspondence between a service type and a forwarding device, the first forwarding device corresponding to the service type of the uplink packet.

In a possible design manner, the access network node further includes an establishment unit; the establishment unit is configured to establish an interface connection to a control device; and the receiving unit is further configured to receive the correspondence between index information and a forwarding device that is from the control node through the interface connection.

In a possible design manner, the access network node further includes an update unit; the receiving unit is further configured to receive an update instruction from the control node, where the update instruction carries a to-be-updated correspondence between index information and a forwarding device; and the update unit is configured to update the correspondence between index information and a forwarding device based on the update instruction.

In a possible design manner, the sending unit is further configured to send the first index information to a third-party server, so that the third-party server determines the first forwarding device corresponding to the first index information, where the third-party server stores at least a correspondence between the first index information and the first forwarding device.

In a possible design manner, the receiving unit is further configured to receive an attach request or a session establishment request that is from the user equipment; and the sending unit is further configured to send the attach request or the session establishment request to the control node, so that the control node allocates the session identifier to the user equipment.

According to a third example there is provided an access network node, including a processor, a memory, a bus, and a communications interface, where the memory is configured to store a computer execution instruction, the processor is connected to the memory by using the bus, and when the access network node runs, the processor executes the computer execution instruction stored in the memory, so that the access network node performs the packet transmission method in any one of the foregoing design manners.

According to a fourth example there is provided a packet transmission system, including the access network node in any one of the foregoing design manners, and user equipment and a forwarding device that are both connected to the access network node.

In a possible design manner, the system further includes a control node connected to the access network node.

According to a fifth example there is provided a computer storage medium, configured to store a computer software instruction used by the foregoing access network node, and the computer software instruction includes programs that are designed for the access network node to perform the foregoing methods.

In the embodiments of the present invention, names of the foregoing access network node, control node, forwarding device, and user equipment constitute no limitation on the devices or function modules. During actual implementation, these devices or function modules may appear with other names. All devices or function modules with functions similar to those in the present invention fall within the scope of the claims of the present invention and equivalent technologies of the present invention.

In addition, for a technical effect brought by any design manner in the second aspect to the fifth example, refer to technical effects brought by different design manners in the first example. Details are not described herein again.

These aspects or other aspects of the present invention are more concise and understandable in the descriptions of the following embodiments.

### BRIEF DESCRIPTION OF DRAWINGS

To describe the technical solutions in the embodiments of the present invention or in the prior art more clearly, the following briefly describes the accompanying drawings for describing the embodiments or the prior art.
FIG. 1 is a schematic architectural diagram of a packet transmission system according to an embodiment of the present invention;
FIG. 2 is a schematic application diagram 1 of a packet transmission system according to an embodiment of the present invention;
FIG. 3 is a schematic application diagram 2 of a packet transmission system according to an embodiment of the present invention;
FIG. 4 is a schematic diagram 1 of interaction and cooperation between network elements in a packet transmission system according to an embodiment of the present invention;
FIG. 5 is a schematic interaction diagram 1 of a packet transmission method according to an embodiment of the present invention;
FIG. 6 is a schematic interaction diagram 2 of a packet transmission method according to an embodiment of the present invention;
FIG. 7 is a schematic interaction diagram 3 of a packet transmission method according to an embodiment of the present invention;
FIG. 8 is a schematic diagram 2 of interaction and cooperation between network elements in a packet transmission system according to an embodiment of the present invention;
FIG. 9 is a schematic structural diagram 1 of an access network node according to an embodiment of the present invention; and
FIG. 10 is a schematic structural diagram 2 of an access network node according to an embodiment of the present invention.

### DESCRIPTION OF EMBODIMENTS

The following clearly and completely describes the technical solutions in the embodiments of the present invention with reference to the accompanying drawings in the embodiments of the present invention. Apparently, the described embodiments are merely some but not all of the embodiments of the present invention.

In addition, the terms "first" and "second" are merely intended for a purpose of description, and shall not be understood as an indication or implication of relative importance or an implicit indication of a quantity of indicated technical features. Therefore, a feature restricted by "first " or "second" may explicitly indicate or implicitly include one or more such features. In the descriptions of the present invention, unless otherwise specified, "a plurality of' means "two or more".

The term "and/or" in this specification describes only an association relationship for describing associated objects and represents that three relationships may exist. For example, A and/or B may represent the following three cases: Only A exists, both A and B exist, and only B exists. In addition, the character "/" in this specification generally indicates an "or" relationship between the associated objects.

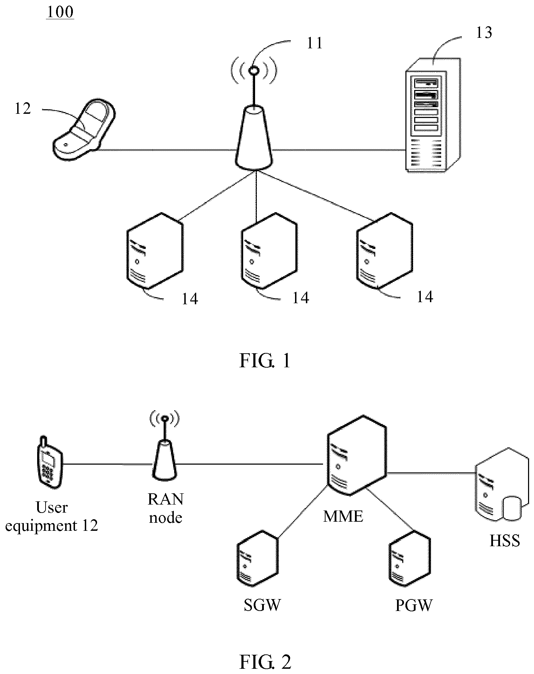

An embodiment of the present invention provides a packet transmission method. The method may be applied to a packet transmission system 100 shown in FIG. 1. The packet transmission system 100 includes an access network node 11, user equipment 12 and a control node 13 in a core network (Core Network, CN) that both can communicate with the access network node 11, and a plurality of forwarding devices 14 that can communicate with the access network node 11.

Before sending an uplink packet to a server that serves the user equipment 12, the user equipment 12 needs to first access the core network by using the access network node 11, and then determine a corresponding forwarding device 14. Finally, the forwarding device 14 sends the uplink packet to the server.

However, in an existing packet transmission method, an interface between the access network node 11 and the control node 13 is in a connectionless (Connectionless, CL) state, and a context and subscription data of the user equipment 12 are stored on the control node 13. Therefore, after the control node 13 accesses the core network, the control node 13 needs to allocate information about the forwarding device, for example, an identifier and an IP address of an SGW, to the user equipment 12. In this way, the user equipment 12 adds the information about the forwarding device to the uplink packet, and sends the uplink packet to the access network node 11, so that the access network node 11 determines, based on the information about the forwarding device that is carried in the uplink packet, the forwarding device 14 that is to forward the uplink packet. Finally, the forwarding device 14 forwards the uplink packet to the corresponding server.

However, for an uplink packet transmitted by the user equipment 12 in a small data service, a size of the information about the forwarding device may be far greater than a size of service data in the uplink packet. Therefore, each time the user equipment 12 sends an uplink packet, most occupied air interface resources are used to transmit the information about the forwarding device. This undoubtedly reduces utilization of the air interface resources.

In view of this, this embodiment of the present invention provides a packet transmission method. In the method, the access network node 11 can determine, based on index information in an uplink packet from any user equipment 12, a forwarding device 14 corresponding to the index information. The index information is used to search for the forwarding device 14 that is to forward the uplink packet. In this way, the access network node 11 can determine the forwarding device 14 that is to forward the uplink packet, provided that the user equipment 12 adds the index information to the uplink packet. In addition, a size of the index information is usually small, and in a conventional packet transmission process, the index information usually also needs to be added to the uplink packet. For example, the index information may be an identifier of the user equipment 12. Therefore, compared with the conventional packet transmission process, in the packet transmission method provided in this embodiment of the present invention, an uplink packet can be successfully transmitted to a corresponding forwarding device 14 without requiring the user equipment 12 to directly add information about the forwarding device to the packet, thereby improving utilization of an air interface resource in the small data service.

For example, the packet transmission system 100 may be a conventional EPC (Evolved Packet Core, evolved packet core) network. FIG. 2 is a schematic architectural diagram of an EPC network. For example, the access network node 11 may be specifically a RAN (Radio Access Network, radio access network) node. The control node 13 may be specifically an MME (Mobility Management Entity, mobility management entity). The MME can interact with an HSS (Home Subscriber Server, home subscriber server) to obtain subscription data of the user equipment 12, and perform authentication on the user equipment 12. In addition, the forwarding device 14 may be specifically an SGW (Serving Gateway, serving gateway), a PGW (Packet Data Network Gateway, packet data network gateway), or the like. There may be one or more SGWs and PGWs. This is not limited in this embodiment of the present invention.

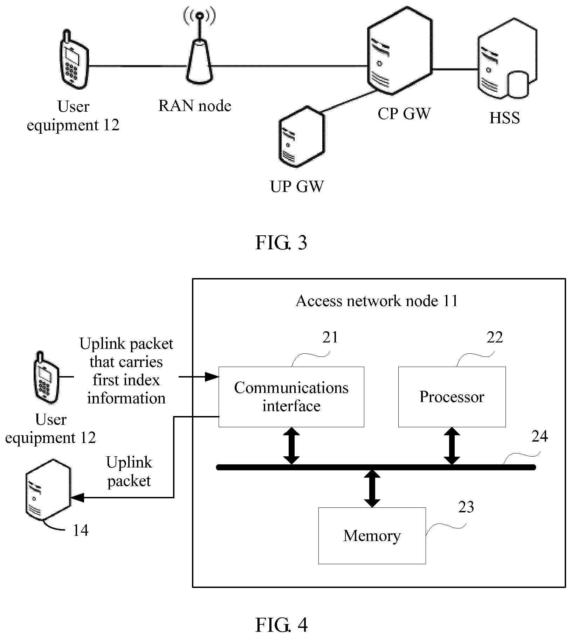

Alternatively, the packet transmission system 100 may be a mobile network architecture in which a control plane is separated from a forwarding plane, for example, a 5G (5th Generation, 5th Generation) network. FIG. 3 is a schematic diagram of a mobile network architecture in which a control plane is separated from a forwarding plane. In this mobile network architecture, a control plane function and a forwarding plane function of a mobile gateway are decoupled, separated control plane function entities such as an MME and a PCRF (Policy and Charging Rules Function, policy and charging rules function) unit are combined into a unified control plane network element (control plane gateway, CP GW), and separated forwarding plane function entities are combined into a unified user plane network element (user plane gateway, UP GW). In this case, different from the control node and the forwarding device in FIG. 2, the control node 13 may be specifically the CP GW, and the forwarding device 14 may be specifically the UP GW. There may be one or more UP GWs. This is not limited in this embodiment of the present invention.

Specifically, FIG. 4 is a schematic diagram of interaction and cooperation between network elements in the packet transmission system 100. In the packet transmission method provided in this embodiment of the present invention, the access network node 11 may receive, by using a communications interface 21, an uplink packet from the user equipment 12. The uplink packet includes first index information, and the first index information is used to search for a first forwarding device 14 that is to forward the uplink packet. Then, a processor 22 in the access network node 11 may interact with a memory 23 to determine an identifier of the first forwarding device 14 corresponding to the first index information. For example, the memory 23 stores a correspondence between index information and a forwarding device. In this case, the processor 22 may find, by reading the correspondence between index information and a forwarding device, the identifier of the first forwarding device 14 corresponding to the first index information. Finally, the access network node 11 sends the uplink packet to the first forwarding device 14 by using the communications interface 21.

Based on the packet transmission system 100, the following describes in detail the packet transmission method provided in this embodiment of the present invention.

For example, the index information may be specifically a session identifier of the user equipment 12. When the uplink packet from the user equipment 12 is an IP packet, the session identifier may be a source IP address of the user equipment 12; or when the uplink packet from the user equipment 12 is a non-IP packet, the session identifier may be an identifier of the user equipment 12.

In this case, the first index information is the session identifier of the user equipment 12 that currently sends the uplink packet.

In this case, the correspondence between index information and a forwarding device may be specifically correspondences between N session identifier number segments and M forwarding devices. Each of the N session identifier number segments is corresponding to one of the M forwarding devices, where N≥1, and M≥1.

For example, the source IP address is the session identifier. In this case, as shown in Table 1, the session identifier number segment is an IP address number segment. Both an IP address number segment 1 and an IP address number segment 3 are corresponding to a forwarding device 1, and an IP address number segment 2 is corresponding to a forwarding device 2. In this case, after receiving the first index information from the user equipment, the access network node 11 may search, based on the source IP address carried in the first index information, Table 1 for a forwarding device, namely, the first forwarding device, corresponding to the source IP address.

**Table 1**

| | |
|---|---|
| IP address number segment 1 (0 to 30) | Forwarding device 1 |
| IP address number segment 2 (31 to 60) | Forwarding device 2 |
| IP address number segment 3 (61 to 100) | Forwarding device 1 |

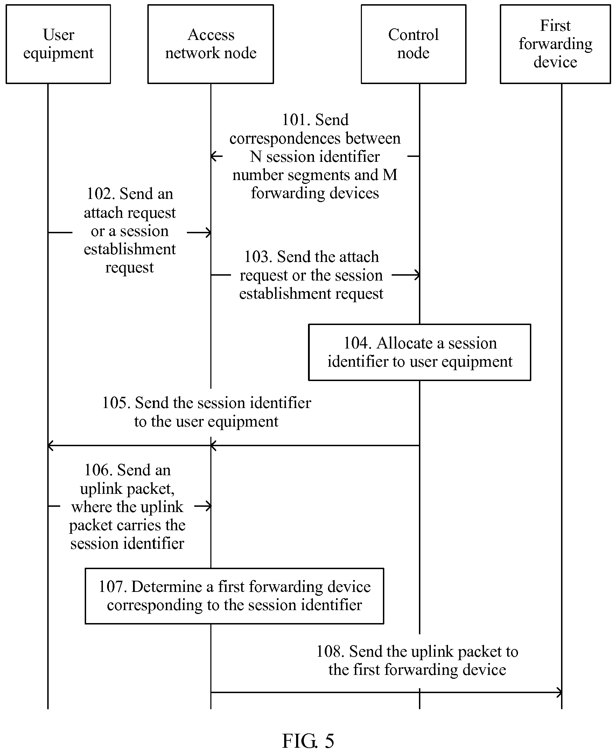

Specifically, as shown in FIG. 5, when the correspondence between index information and a forwarding device is specifically the correspondences between the N session identifier number segments and the M forwarding devices, the packet transmission method provided in this embodiment of the present invention includes the following steps.

101. A control node sends correspondences between N session identifier number segments and M forwarding devices to an access network node.

Each of the N session identifier number segments is corresponding to one of the M forwarding devices.

Specifically, before the access network node communicates with user equipment, for example, in a process of powering on the access network node, the access network node may establish an interface connection to the control device. Then, the control node delivers the correspondences between the N session identifier number segments and the M forwarding devices, for example, correspondences that are between N IP address number segments and M forwarding devices and that are shown in Table 1, to the access network node through the interface connection. Optionally, because the access network node may further receive a non-IP packet from the user equipment, the correspondences between the N session identifier number segments and the M forwarding devices may further include a correspondence between an identifier number segment of at least one user equipment and at least one forwarding device. Similarly, an identifier number segment of each user equipment is corresponding to one forwarding device.

In this way, each time any user equipment subsequently sends an uplink packet to the access network node, the access network node may determine, in the correspondences between the N session identifier number segments and the M forwarding devices based on a session identifier carried in the uplink packet, a forwarding device corresponding to the session identifier, without requiring the user equipment to add any information about the forwarding device to the uplink packet, thereby improving utilization of an air interface resource in the small data service.

102. User equipment sends an attach request or a session establishment request to the access network node.

Specifically, after step 101, the user equipment may send the attach request or the session establishment request to the access network node to access a core network.

Further, indication information may be carried in the attach request or the session establishment request to indicate a service type of an uplink packet subsequently from the user equipment. For example, the subsequently sent uplink packet is an IP packet or a non-IP packet.

103. The access network node sends the attach request or the session establishment request to the control node.

104. The control node allocates a session identifier to the user equipment based on the attach request or the session establishment request.

Specifically, the control node records a session identifier number segment supported by each access network node. For example, in step 101, session identifier number segments supported by the access network node are the N session identifier number segments that are from the control node to the access network node. Therefore, after the attach request or the session establishment request that is from the user equipment is received, the control node is triggered to allocate a session identifier in the N session identifier number segments to the user equipment. The session identifier may be an identifier or a source IP address of the user equipment.

For example, the indication information for indicating the service type of the subsequently sent uplink packet may be carried in the attach request or the session establishment request that is from the user equipment. When the indication information indicates that the subsequently sent uplink packet is an IP packet, the control node may allocate a source IP address to the user equipment. When the indication information indicates that the subsequently sent uplink packet is a non-IP packet, the control node may allocate an identifier to the user equipment.

Certainly, in a process of performing step 104, the control node may further obtain subscription data of the user equipment from an HSS, to perform authentication on the user equipment, for example, to determine whether the user equipment supports sending of the IP packet.

Alternatively, the indication information may not be carried in the attach request or the session establishment request that is from the user equipment. The control node may allocate a session identifier to the user equipment based on a preset policy, for example, based on the subscription data of the user equipment that is obtained from the HSS. This is not limited in this embodiment of the present invention.

105. The control node sends the session identifier to the user equipment by using the access network node.

106. The user equipment sends an uplink packet to the access network node, where the uplink packet carries the session identifier.

Specifically, after the user equipment obtains the session identifier from the control node, if the user equipment needs to send the uplink packet to the access network node, the user equipment adds the session identifier to the uplink packet, and then sends the uplink packet to the access network node.

For example, the user equipment is a smart water meter. The smart water meter needs to send, to a server of a water supply company every day, a value currently recorded in the water meter. In the solution in the present invention, the smart water meter may encapsulate the value and the session identifier into an uplink packet, and send the uplink packet to the access network node. For example, when the session identifier is a source IP address of the smart water meter, 5-tuple information such as the source IP address may be encapsulated in a header of the uplink packet.

107. The access network node determines, based on the correspondences between the N session identifier number segments and the M forwarding devices, a first forwarding device corresponding to the session identifier.

In this way, in step 107, the access network node may obtain, through parsing, the session identifier carried in the uplink packet, and then determine a target session identifier number segment (the target session identifier number segment is one of the N session identifier number segments) to which the session identifier belongs. Finally, the access network node searches, for the first forwarding device corresponding to the target session identifier number segment, the correspondences that are between the N session identifier number segments and the M forwarding devices and that are received in step 101. The first forwarding device is one of the M forwarding devices.

In the correspondences between the N session identifier number segments and the M forwarding devices, an address of a forwarding device or an identifier of the forwarding device may be used to indicate the corresponding forwarding device. This is not limited in this embodiment of the present invention.

108. The access network node sends the uplink packet to the first forwarding device.

Finally, the access network node sends the uplink packet to the first forwarding device based on a determined address or identifier of the first forwarding device. Then, the first forwarding device may parse the uplink packet to obtain a destination IP address of the uplink packet, and then forward the uplink packet to a corresponding server based on the destination IP address.

Further, when step 107 is performed, the session identifier carried in the uplink packet may not belong to any one of the N session identifier number segments. For example, the user equipment is originally attached to an access network node 1 in a cell 1, and when the user equipment moves to a cell 2, if the user equipment sends the uplink packet to an access network node 2 in the cell 2, a session identifier number segment supported by the access network node 2 may not include the session identifier carried in the uplink packet.

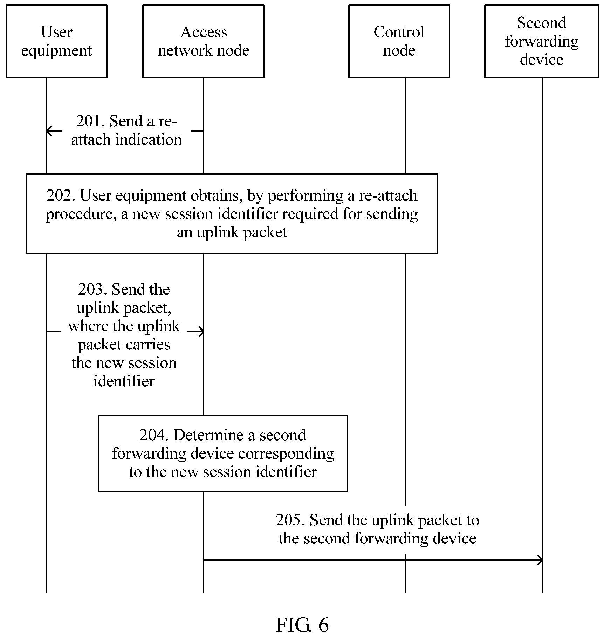

In this case, as shown in FIG. 6, the packet transmission method further includes the following steps:
201. The access network node sends a re-attach indication to the user equipment.

When the session identifier carried in the uplink packet does not belong to any one of the N session identifier number segments, the access network node may send the re-attach indication to the user equipment. The re-attach indication may be an error message. After receiving the error message, the user equipment triggers a re-attach procedure.

202. The user equipment obtains, by performing a re-attach procedure, a new session identifier for sending the uplink packet.

Specifically, the attachment procedure shown in steps 102 to 105 may be still performed, so that the user equipment obtains the new session identifier for sending the uplink packet. The new session identifier belongs to the N session identifier number segments.

203. The access network node receives the uplink packet from the user equipment again, where the uplink packet carries the new session identifier.

204. The access network node determines a second forwarding device corresponding to the new session identifier.

Similar to step 107, in this step, the access network node searches the correspondences between the N session identifier number segments and the M forwarding devices for a target session identifier number segment to which the new session identifier belongs, and then determines the second forwarding device corresponding to the target session identifier number segment. The second forwarding device may be the same as or different from the first forwarding device.

205. The access network node sends the uplink packet to the second forwarding device.

Up to now, in the foregoing embodiment, the example in which the index information is the session identifier of the user equipment is used to describe the packet transmission method provided in this embodiment of the present invention. In another possible implementation solution, the index information may alternatively be information for indicating a service type of the uplink packet from the user equipment. For example, the information for indicating the service type of the uplink packet from the user equipment is specifically a service type identifier of the uplink packet. For example, when the service type identifier is 01, it indicates that the uplink packet is specific to a smart water meter service; or when the service type identifier is 11, it indicates that the uplink packet is specific to a smart electricity meter service.

In this case, the correspondence between index information and a forwarding device is specifically correspondences between X service types and Y forwarding devices. Each of the X service types is corresponding to one of the Y forwarding devices, where X≥1, and Y≥1. As shown in Table 2, a service type identifier 01 is corresponding to a forwarding device 1, and a service type identifier 11 is corresponding to a forwarding device 2. In this case, after receiving the first index information from the user equipment, the access network node may search, based on the service type identifier (namely, the index information) carried in the first index information, Table 2 for a forwarding device, namely, the first forwarding device, corresponding to the service type identifier.

**Table 2**

| Service type identifier | Forwarding device |
|---|---|
| 01 | Forwarding device 1 |
| 11 | Forwarding device 2 |
| ... | ... |

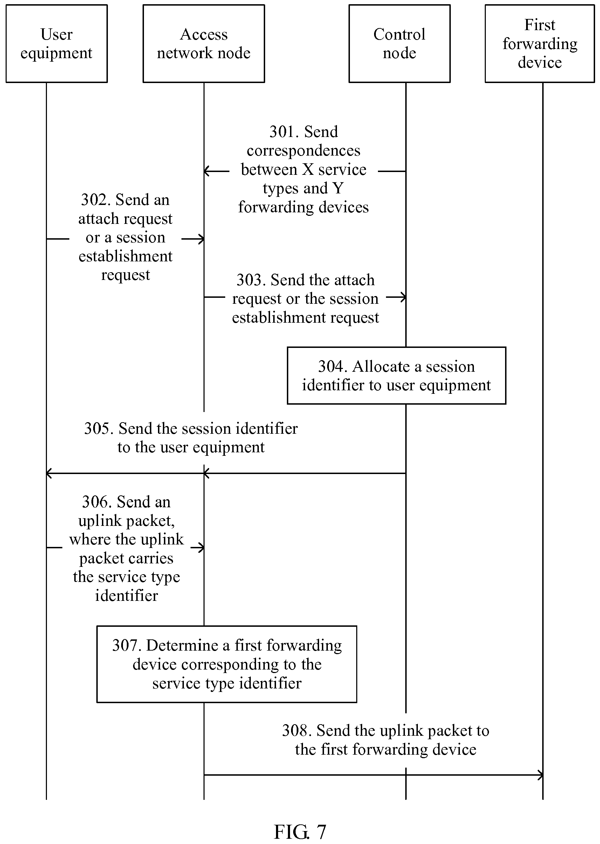

Specifically, as shown in FIG. 7, when the correspondence between index information and a forwarding device is specifically the correspondences between the X service types and the Y forwarding devices, the packet transmission method provided in this embodiment of the present invention includes the following steps:
301. A control node sends correspondences between X service types and Y forwarding devices to an access network node.

Different from step 101, in step 301, the correspondence between index information and a forwarding device that is from the control node to the access network node is correspondences between X service types and Y forwarding devices shown in Table 2.

Alternatively, a management system in the core network, for example, a network management device in the core network, may set, in the control node, the correspondences between the X service types and the Y forwarding devices. This is not limited in this embodiment of the present invention.

302. User equipment sends an attach request or a session establishment request to the access network node.

303. The access network node sends the attach request or the session establishment request to the control node.

304. The control node allocates a session identifier to the user equipment based on the attach request or the session establishment request.

305. The control node sends the session identifier to the user equipment by using the access network node.

An attachment process in steps 302 to 305 is the same as the attachment process in steps 102 to 105. Therefore, details are not described herein again.

306. The user equipment sends an uplink packet to the access network node, where the uplink packet carries the service type identifier.

307. The access network node determines, based on the correspondences between the X service types and the Y forwarding devices, a first forwarding device corresponding to the service type identifier.

Specifically, in step 307, the access network node searches, for the first forwarding device corresponding to the service type identifier, the correspondences that are between the X service types and the Y forwarding devices and that are received in step 301. The first forwarding device is one of the Y forwarding devices.

In addition, the session identifier allocated to the user equipment in the attach process may be used to distinguish between an IP service and a non-IP service. To be specific, when the session identifier is the identifier of the user equipment, the uplink packet is a non-IP packet; or when the session identifier is the source IP address, the uplink packet is an IP packet. Therefore, in step 306, the service type identifier carried in the uplink packet may alternatively be the session identifier.

In this case, the correspondences between the X service types and the Y forwarding devices are shown in Table 3. When the service type identifier carried in the uplink packet is the source IP address, a forwarding device 1 is the first forwarding device; or when the service type identifier carried in the uplink packet is the identifier of the user equipment, a forwarding device 2 is the first forwarding device.

**Table 3**

| Service type identifier | Forwarding device |
|---|---|
| Source IP address | Forwarding device 1 |
| Identifier of user equipment | Forwarding device 2 |

308. The access network node sends the uplink packet to the first forwarding device.

Further, in any one of processes of performing steps 102 to 108, steps 201 to 205, and steps 301 to 308, the access network node may further perform the following steps 401 and 402.

401. The access network node receives an update instruction from the control node, where the update instruction carries a to-be-updated correspondence between index information and a forwarding device.

402. The access network node updates the correspondence between index information and a forwarding device based on the update instruction.

Specifically, in step 401, the control node may generate the update instruction for the access network node based on a load state of each forwarding device, to update the correspondence between index information and a forwarding device, thereby implementing load balancing between access network nodes.

For example, a new forwarding device and index information corresponding to the new forwarding device are added to the correspondence between index information and a forwarding device, or the original first forwarding device corresponding to the first index information is changed to the second forwarding device.

The correspondence between an IP address number segment and a forwarding device that is shown in Table 1 is used as an example. When a new forwarding device 3 needs to be added, the control node may determine an IP address number segment 4 corresponding to the forwarding device 3. In this case, a correspondence between the forwarding device 3 and the IP address number segment 4 is added to the update instruction, and then the update instruction is delivered to the access network node. The access network node updates, based on the update instruction, the correspondence between an IP address number segment and a forwarding device that is shown in Table 1. An updated correspondence between an IP address number segment and a forwarding device is shown in Table 4.

**Table 4**

| | |
|---|---|
| IP address number segment 1 (0 to 30) | Forwarding device 1 |
| IP address number segment 2 (31 to 60) | Forwarding device 2 |
| IP address number segment 3 (61 to 100) | Forwarding device 1 |
| IP address number segment 4 (100 to 130) | Forwarding device 3 |

Alternatively, when load of the forwarding device 1 is excessively high, the control node may adjust, to the forwarding device 3, the forwarding device 1 corresponding to the IP address number segment 1; and add a correspondence between the forwarding device 3 and the IP address number segment 1 to the update instruction, and then send the update instruction to the access network node. The access network node updates, based on the update instruction, the correspondence between an IP address number segment and a forwarding device that is shown in Table 1. An updated correspondence between an IP address number segment and a forwarding device is shown in Table 5.

**Table 5**

| | |
|---|---|
| IP address number segment 1 (0 to 30) | Forwarding device 3 |
| IP address number segment 2 (31 to 60) | Forwarding device 2 |
| IP address number segment 3 (61 to 100) | Forwarding device 1 |

It should be noted that the control node may deliver only the to-be-updated correspondence between index information and a forwarding device to the access network node, and then the access network node updates the received correspondence between index information and a forwarding device.

Alternatively, the control node may deliver, to the access network node, the updated complete correspondence between index information and a forwarding device (including the to-be-updated correspondence between index information and a forwarding device) that is shown in Table 4 or Table 5, and the access network node only needs to directly replace the original correspondence between index information and a forwarding device. This is not limited in this embodiment of the present invention.

Optionally, in another possible implementation solution, the packet transmission system 100 further includes a third-party server 15, for example, a DNS (Domain Name System, domain name system) server. The third-party server 15 stores the correspondence between index information and a forwarding device in the foregoing embodiment.

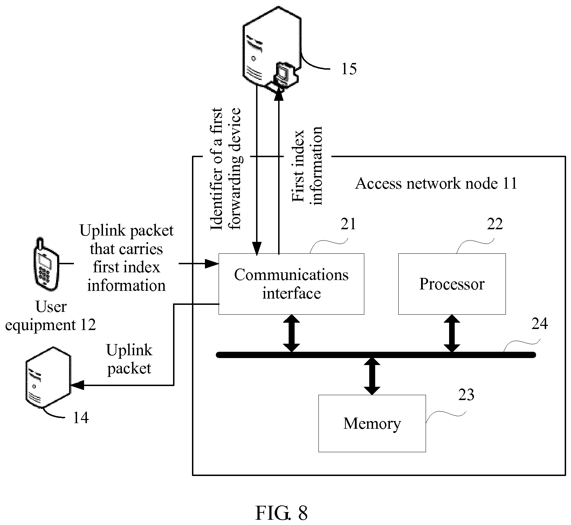

In this case, FIG. 8 is a schematic diagram of interaction and cooperation between network elements in the packet transmission system 100. For example, the access network node 11 can receive an uplink packet from the user equipment 12 by using a communications interface 21. The uplink packet includes first index information, and the first index information is used to search for a first forwarding device 14 that is to forward the uplink packet. Then, a processor 22 in the access network node 11 may invoke the communications interface 21, to send the first index information to the third-party server 15. The third-party server 15 searches, for the first forwarding device 14 corresponding to the first index information, the correspondence between index information and a forwarding device that is stored on the third-party server 15, and sends an identifier or an address of the first forwarding device 14 to the access network node 11. Finally, the access network node 11 sends the uplink packet to the first forwarding device 14 by using the communications interface 21.

To be specific, each time the user equipment 12 sends an uplink packet to the access network node 11, the uplink packet does not need to carry any information about a forwarding device. Instead, the access network node 11 interacts with the third-party server 15, to determine the corresponding first forwarding device 14 based on first index information in the uplink packet, thereby improving utilization of an air interface resource in the small data service.

Up to now, this embodiment of the present invention provides the packet transmission method. In the method, the access network node can determine, based on the index information in the uplink packet from the user equipment, the forwarding device corresponding to the index information. The index information is used to search for the forwarding device that is to forward the uplink packet. In this way, the access network node can determine the forwarding device that is to forward the uplink packet, provided that the user equipment adds the index information to the uplink packet. In addition, a size of the index information is usually small, and during conventional packet transmission, the index information usually also needs to be added to the uplink packet. For example, the index information may be an identifier of the user equipment. Therefore, compared with the conventional packet transmission process, in the packet transmission method provided in this embodiment of the present invention, an uplink packet can be successfully transmitted to a corresponding forwarding device without requiring the user equipment to add information about the forwarding device to the packet, thereby improving utilization of an air interface resource in the small data service.

The foregoing embodiment mainly describes the solutions provided in the embodiments of the present invention from the perspective of interaction between network elements. It may be understood that, to implement the foregoing functions, the network elements such as the access network node 11, the user equipment 12, the control node 13, the forwarding device 14, and the third-party server 15 each include a corresponding hardware structure and/or software module for performing the functions. A person of ordinary skill in the art should be easily aware that, the units and algorithm steps in the examples described with reference to the embodiments disclosed in this specification can be implemented in the present invention by hardware or a combination of hardware and computer software. Whether the functions are performed by hardware or by computer software driving hardware depends on particular applications and design constraint conditions of the technical solutions. A person skilled in the art may use different methods to implement the described functions for each particular application, but it should not be considered that the implementation goes beyond the scope of the present invention.

In the embodiments of the present invention, the access network node 11, the user equipment 12, the control node 13, the forwarding device 14, the third-party server 15, and the like each may be divided into function modules based on the foregoing method examples. For example, each function module may be obtained through division based on each function, or two or more functions may be integrated into one processing module. The integrated module may be implemented in a form of hardware, or may be implemented in a form of a software function module. It should be noted that the module division in the embodiments of the present invention is an example, and is merely logical function division. There may be another division manner during actual implementation.

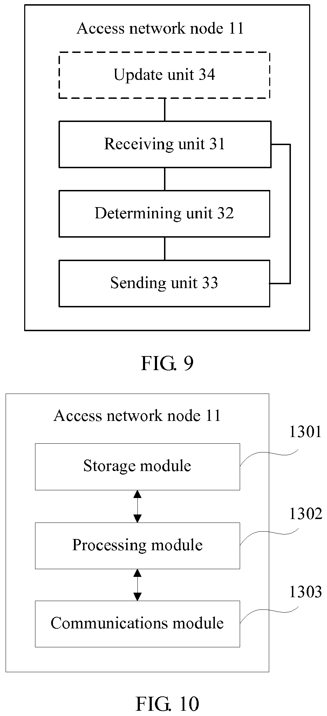

When each function module is obtained through division based on each function, FIG. 9 is a possible schematic structural diagram of the access network node 11 in the foregoing embodiment. The access network node 11 includes a receiving unit 31, a determining unit 32, a sending unit 33, and an update unit 34. The receiving unit 31 is configured to support the access network node 11 in performing the steps 101, 102, and 106 in FIG. 5, the step 203 in FIG. 6, the steps 301, 302, and 306 in FIG. 7, and step 401. The determining unit 32 is configured to support the access network node 11 in performing the step 107 in FIG. 5, the step 204 in FIG. 6, and the step 307 in FIG. 7. The sending unit 33 is configured to support the access network node 11 in performing the steps 103 and 108 in FIG. 5, the steps 201 and 205 in FIG. 6, and the steps 303 and 308 in FIG. 7. The update unit 34 is configured to support the access network node 11 in performing step 402. All related content of each step in the foregoing method embodiment may be cited in function descriptions of a corresponding function module. Details are not described herein again.

When an integrated unit is used, FIG. 10 is a possible schematic structural diagram of the access network node 11 in the foregoing embodiment. The access network node 11 includes a processing module 1302 and a communications module 1303. The processing module 1302 is configured to control and manage an action of the access network node 11. For example, The processing module 1302 is configured to support the access network node 11 in performing the step 107 in FIG. 5, the step 204 in FIG. 6, the step 307 in FIG. 7, and step 402, and/or is configured to perform another process of the technology described in this specification. The communications module 1303 is configured to support the access network node 11 in communicating with another network entity, for example, communicating with function modules or network entities shown in FIG. 1 and FIG. 4 to FIG. 8. The access network node 11 may further include a storage module 1301, configured to store program code and data of a base station.

The processing module 1302 may be a processor or a controller, for example, may be a central processing unit (Central Processing Unit, CPU), a general purpose processor, a digital signal processor (Digital Signal Processor, DSP), an application-specific integrated circuit (Application-Specific Integrated Circuit, ASIC), a field programmable gate array (Field Programmable Gate Array, FPGA) or another programmable logic device, a transistor logic device, a hardware component, or any combination thereof. The processing module 1302 may implement or execute various example logical blocks, modules, and circuits that are described with reference to the content disclosed in the present invention. The processor may alternatively be a combination implementing a computing function, for example, a combination including one or more microprocessors, or a combination of a DSP and a microprocessor. The communications module 1303 may be a transceiver, a transceiver circuit, a communications interface, or the like. The storage module 1301 may be a memory.

When The processing module 1302 is a processor, the communications module 1303 is a communications interface, and the storage module 1301 is a memory, the access network node in this embodiment of the present invention may be the access network node 11 shown in FIG. 10.

Referring to FIG. 4 or FIG. 8, the access network node 11 may specifically include a processor 22, a communications interface 21, a memory 23, and a bus 24. The communications interface 21, the processor 22, and the memory 23 are connected to each other by using the bus 24. The bus 24 may be a peripheral component interconnect (Peripheral Component Interconnect, PCI) bus or an extended industry standard architecture (Extended Industry Standard Architecture, EISA) bus, or the like. The bus may be categorized as an address bus, a data bus, a control bus, or the like. For ease of indication, the bus is indicated by using only one bold line in FIG. 4 or FIG. 8. However, it does not indicate that there is only one bus or only one type of bus.

The methods or algorithm steps described with reference to the content disclosed in the present invention may be implemented by hardware, or may be implemented by executing a software instruction by a processor. The software instruction may include a corresponding software module. The software module may be stored in a random access memory (Random Access Memory, RAM), a flash memory, a read-only memory (Read-Only Memory, ROM), an erasable programmable read-only memory (Erasable Programmable ROM, EPROM), an electrically erasable programmable read-only memory (Electrically EPROM, EEPROM), a register, a hard disk, a removable hard disk, a compact disc read-only memory (CD-ROM), or a storage medium in any other forms well-known in the art. An example storage medium is coupled to the processor, so that the processor can read information from the storage medium, and can write information into the storage medium. Certainly, the storage medium may be a part of the processor. The processor and the storage medium may be located in an ASIC. In addition, the ASIC may be located in a core network interface device. Certainly, the processor and the storage medium may exist in the core network interface device as discrete components.

A person skilled in the art should be aware that in one or more of the foregoing examples, the functions described in the present invention may be implemented by hardware, software, firmware, or any combination thereof. When the functions are implemented by software, these functions may be stored in a computer-readable medium or transmitted as one or more instructions or code in the computer-readable medium. The computer-readable medium includes a computer storage medium and a communications medium. The communications medium includes any medium that enables a computer program to be transmitted from one place to another place. The storage medium may be any available medium accessible to a general-purpose or dedicated computer.

The objectives, technical solutions, and benefit effects of the present invention are further described in detail in the foregoing specific implementations. It should be understood that the foregoing descriptions are merely specific implementations of the present invention, but are not intended to limit the protection scope of the present invention. Any modification, improvement, or the like made based on the technical solutions of the present invention shall fall within the protection scope of the present invention.

## Claims

1. A packet transmission method, comprising:
receiving, by an access network node (11), an uplink packet from user equipment (12), wherein the uplink packet comprises first index information,
searching by the access network node for a first forwarding device (14) that is to forward the uplink packet using the first index information;
determining, by the access network node, the first forwarding device corresponding to the first index information; and
sending, by the access network node, the uplink packet to the first forwarding device, **characterized in that**:
the access network node stores a correspondence between index information and a forwarding device; and
the determining, by the access network node, the first forwarding device corresponding to the first index information comprises:
determining (107), by the access network node based on the correspondence between index information and a forwarding device, the first forwarding device corresponding to the first index information; and
wherein the first index information comprises a session identifier of the user equipment, and the session identifier comprises an identifier of the user equipment or a source Internet Protocol IP address of the user equipment; and the correspondence between index information and a forwarding device is a correspondence between a session identifier number segment and a forwarding device; and
the method further comprises:
determining, by the access network node, that the session identifier does not belong to any session identifier number segment in the correspondence between a session identifier number segment and a forwarding device;
sending (201), by the access network node, a re-attach indication to the user equipment,
wherein, sending (201) causes the user equipment to obtain a new session identifier for sending the uplink packet; and
determining (204), by the access network node, a second forwarding device corresponding to the new session identifier, and sending the uplink packet to the second forwarding device.

2. The method according to claim 1, wherein the first index information comprises a session identifier of the user equipment, and the session identifier comprises an identifier of the user equipment or a source Internet Protocol IP address of the user equipment;
the correspondence between index information and a forwarding device is a correspondence between a session identifier number segment and a forwarding device; and
the determining, by the access network node, the first forwarding device corresponding to the first index information comprises:
determining, by the access network node, a target session identifier number segment to which the session identifier belongs; and
determining, by the access network node based on the correspondence between a session identifier number segment and a forwarding device, the first forwarding device corresponding to the target session identifier number segment.

3. The method according to any one of claims 1 or 2, wherein before the determining, by the access network node based on the correspondence between index information and a forwarding device, the first forwarding device corresponding to the first index information, the method further comprises:
establishing, by the access network node, an interface connection to a control device; and
receiving, by the access network node, the correspondence between index information and a forwarding device from the control node sent through the interface connection.

4. The method according to any one of claims 1 to 3, wherein the method further comprises:
receiving, by the access network node, an update instruction from the control node, wherein the update instruction carries a to-be-updated correspondence between index information and a forwarding device; and
updating, by the access network node, the correspondence between index information and a forwarding device based on the update instruction.

5. The method according to any one of claims 1 to 4, wherein before the receiving, by an access network node, an uplink packet from user equipment, the method further comprises:
receiving, by the access network node, an attach request or a session establishment request from the user equipment; and
sending, by the access network node, the attach request or the session establishment request to the control node, so that the control node allocates the session identifier to the user equipment.

6. An access network node, comprising means configured to perform the steps according to any one of claims 1-5.

7. A packet transmission system (100), comprising the access network node according to claim 6, and user equipment (12) and a forwarding device (14) that are both connected to the access network node.

8. The system according to claim 7, wherein the system further comprises a control node connected to the access network node.

## Patentansprüche

1. Paketübertragungsverfahren, umfassend:
Empfangen, durch einen Zugangsnetzknoten (11), eines Aufwärtsstreckenpakets von einer Benutzereinrichtung (12), wobei das Aufwärtsstreckenpaket eine erste Indexinformation enthält,
Suchen, durch den Zugangsnetzknoten, nach einer ersten Weiterleitungsvorrichtung (14), die das Aufwärtsstreckenpaket unter Verwenden der ersten Indexinformation weiterleiten soll;
Bestimmen, durch den Zugangsnetzknoten, der ersten Weiterleitungsvorrichtung entsprechend der ersten Indexinformation; und
Senden, durch den Zugangsnetzknoten, des Aufwärtsstreckenpakets an die erste Weiterleitungsvorrichtung, **dadurch gekennzeichnet, dass**
der Zugangsnetzknoten eine Entsprechung zwischen einer Indexinformation und einer Weiterleitungsvorrichtung speichert; und
das Bestimmen, durch den Zugangsnetzknoten, der ersten Weiterleitungsvorrichtung entsprechend der ersten Indexinformation, umfasst:
Bestimmen (107), durch den Zugangsnetzknoten anhand der Entsprechung zwischen einer Indexinformation und einer Weiterleitungsvorrichtung, der ersten Weiterleitungsvorrichtung entsprechend der ersten Indexinformation; und
wobei die erste Indexinformation eine Sitzungskennung der Benutzereinrichtung umfasst, und die Sitzungskennung eine Kennung der Benutzereinrichtung oder eine Quell-Internet-Protokoll(IP)-Adresse der Benutzereinrichtung umfasst; und die Entsprechung zwischen einer Indexinformation und einer Weiterleitungsvorrichtung eine Entsprechung zwischen einem Sitzungskennungsnummernsegment und einer Weiterleitungsvorrichtung ist; und
wobei das Verfahren ferner umfasst:
Bestimmen, durch den Zugangsnetzknoten, dass die Sitzungskennung nicht zu einem beliebigen Sitzungskennungsnummernsegment in der Entsprechung zwischen einem Sitzungskennungsnummernsegment und einer Weiterleitungsvorrichtung gehört;
Senden (201), durch den Zugangsnetzknoten, einer Wiederverbindungsanzeige an die Benutzereinrichtung, wobei das Senden (201) die Benutzereinrichtung veranlasst, eine neue Sitzungskennung zum Senden des Aufwärtsstreckenpakets zu beschaffen; und
Bestimmen (204), durch den Zugangsnetzknoten, einer zweiten Weiterleitungsvorrichtung entsprechend der neuen Sitzungskennung, und Senden des Aufwärtsstreckenpakets an die zweite Weiterleitungsvorrichtung.

2. Verfahren nach Anspruch 1, wobei die erste Indexinformation eine Sitzungskennung der Benutzereinrichtung umfasst, und die Sitzungskennung eine Kennung der Benutzereinrichtung oder eine Quell-Internet-Protokoll(IP)-Adresse der Benutzereinrichtung umfasst;
wobei die Entsprechung zwischen einer Indexinformation und einer Weiterleitungsvorrichtung eine Entsprechung zwischen einem Sitzungskennungsnummernsegment und einer Weiterleitungsvorrichtung ist; und wobei das Bestimmen, durch den Zugangsnetzknoten, der ersten Weiterleitungsvorrichtung entsprechend der ersten Indexinformation, umfasst:
Bestimmen, durch den Zugangsnetzknoten, eines Zielsitzungskennungsnummernsegments, zu der die Sitzungskennung gehört; und
Bestimmen, durch den Zugangsnetzknoten anhand der Entsprechung zwischen einem Sitzungskennungsnummernsegment und einer Weiterleitungsvorrichtung, der ersten Weiterleitungsvorrichtung entsprechend dem Zielsi tzungskennungsnummernsegment.

3. Verfahren nach einem der Ansprüche 1 oder 2, wobei vor dem Bestimmen, durch den Zugangsnetzknoten anhand der Entsprechung zwischen einer Indexinformation und einer Weiterleitungsvorrichtung, der ersten Weiterleitungsvorrichtung entsprechend der ersten Indexinformation, das Verfahren ferner umfasst:
Herstellen, durch den Zugangsnetzknoten, einer Schnittstellenverbindung mit einer Steuervorrichtung; und
Empfangen, durch den Zugangsnetzknoten, der über die Schnittstellenverbindung gesendeten Entsprechung zwischen einer Indexinformation und einer Weiterleitungsvorrichtung von dem Steuerknoten.

4. Verfahren nach einem der Ansprüche 1 bis 3, wobei das Verfahren ferner umfasst:
Empfangen, durch den Zugangsnetzknoten, einer Aktualisierungsanweisung von dem Steuerknoten, wobei die Aktualisierungsanweisung eine zu aktualisierende Entsprechung zwischen einer Indexinformation und einer Weiterleitungsvorrichtung enthält; und
Aktualisieren, durch den Zugangsnetzknoten, der Entsprechung zwischen einer Indexinformation und einer Weiterleitungsvorrichtung anhand der Aktualisierungsanweisung.

5. Verfahren nach einem der Ansprüche 1 bis 4, wobei vor dem Empfangen, durch einen Zugangsnetzknoten, eines Aufwärtsstreckenpakets von einer Benutzereinrichtung, das Verfahren ferner umfasst:
Empfangen, durch den Zugangsnetzknoten, einer Verbindungsanforderung oder einer Sitzungsherstellungsanforderung von der Benutzereinrichtung; und
Senden, durch den Zugangsnetzknoten, der Verbindungsanforderung oder der Sitzungsherstellungsanforderung an den Steuerknoten, damit der Steuerknoten die Sitzungskennung der Benutzereinrichtung zuweist.

6. Zugangsnetzknoten, umfassend Mittel, die ausgestaltet sind, die Schritte nach einem der Ansprüche 1-5 durchzuführen.

7. Paketübertragungssystem (100), umfassend den Zugangsnetzknoten nach Anspruch 6, und eine Benutzereinrichtung (12) und eine Weiterleitungsvorrichtung (14), die beide mit dem Zugangsnetzknoten verbunden sind.

8. System nach Anspruch 7, wobei das System ferner einen Steuerknoten umfasst, der mit dem Zugangsnetzknoten verbunden ist.

## Revendications

1. Procédé d'émission de paquets, comprenant les étapes consistant à :
recevoir, par un nœud de réseau d'accès (11), un paquet de liaison montante provenant d'un équipement d'utilisateur (12), le paquet de liaison montante contenant des premières informations d'index,
rechercher, par le nœud de réseau d'accès, un premier dispositif d'expédition (14) qui doit expédier le paquet de liaison montante à l'aide des premières informations d'index ;
déterminer, par le nœud de réseau d'accès, le premier dispositif d'expédition correspondant aux premières informations d'index ; et
envoyer, par le nœud de réseau d'accès, le paquet de liaison montante au premier dispositif d'expédition, **caractérisé en ce que** :
le nœud de réseau d'accès stocke une correspondance entre les informations d'index et un dispositif d'expédition ; et
la détermination, par le nœud de réseau d'accès, du premier dispositif d'expédition correspondant aux premières informations d'index comprend l'étape consistant à :
déterminer (107), par le nœud de réseau d'accès d'après la correspondance entre les informations d'index et un dispositif d'expédition, le premier dispositif d'expédition correspondant aux premières informations d'index ; et
dans lequel les premières informations d'index contiennent un identifiant de session de l'équipement d'utilisateur, et l'identifiant de session contient un identifiant de l'équipement d'utilisateur ou une adresse de protocole Internet IP source de l'équipement d'utilisateur ; et la correspondance entre les informations d'index et un dispositif d'expédition est une correspondance entre un segment de numéro d'identifiant de session et un dispositif d'expédition ; et
le procédé comprend également les étapes consistant à :
déterminer, par le nœud de réseau d'accès, que l'identifiant de session n'appartient à aucun segment de numéro d'identifiant de session dans la correspondance entre un segment de numéro d'identifiant de session et un dispositif d'expédition ;
envoyer (201), par le nœud de réseau d'accès, une indication de ré-annexion à l'équipement d'utilisateur,
l'envoi (201) amenant l'équipement d'utilisateur à obtenir un nouvel identifiant de session pour envoyer le paquet de liaison montante ; et
déterminer (204), par le nœud de réseau d'accès, un deuxième dispositif d'expédition correspondant au nouvel identifiant de session, et envoyer le paquet de liaison montante au deuxième dispositif d'expédition.

2. Procédé selon la revendication 1, dans lequel les premières informations d'index contiennent un identifiant de session de l'équipement d'utilisateur, et l'identifiant de session contient un identifiant de l'équipement d'utilisateur ou une adresse de protocole Internet IP source de l'équipement d'utilisateur ;
la correspondance entre les informations d'index et un dispositif d'expédition est une correspondance entre un segment de numéro d'identifiant de session et un dispositif d'expédition ; et
la détermination, par le nœud de réseau d'accès, du premier dispositif d'expédition correspondant aux premières informations d'index comprend les étapes consistant à :
déterminer, par le nœud de réseau d'accès, un segment de numéro d'identifiant de session cible auquel l'identifiant de session appartient ; et
déterminer, par le nœud de réseau d'accès d'après la correspondance entre un segment de numéro d'identifiant de session et un dispositif d'expédition, le premier dispositif d'expédition correspondant au segment de numéro d'identifiant de session cible.

3. Procédé selon l'une quelconque des revendications 1 et 2, le procédé, avant la détermination, par le nœud de réseau d'accès d'après la correspondance entre les informations d'index et un dispositif d'expédition, du premier dispositif d'expédition correspondant aux premières informations d'index, comprenant également les étapes consistant à :
établir, par le nœud de réseau d'accès, une connexion d'interface avec un dispositif de commande ; et
recevoir, par le nœud de réseau d'accès, la correspondance entre les informations d'index et un dispositif d'expédition en provenance du nœud de commande, envoyée au moyen de la connexion d'interface.

4. Procédé selon l'une quelconque des revendications 1 à 3, le procédé comprenant également les étapes consistant à :
recevoir, par le nœud de réseau d'accès, une instruction de mise à jour provenant du nœud de commande, l'instruction de mise à jour transportant une correspondance à mettre à jour entre les informations d'index et un dispositif d'expédition ; et
mettre à jour, par le nœud de réseau d'accès, la correspondance entre des informations d'index et un dispositif d'expédition d'après l'instruction de mise à jour.

5. Procédé selon l'une quelconque des revendications 1 à 4, le procédé, avant la réception, par un nœud de réseau d'accès, d'un paquet de liaison montante provenant d'un équipement d'utilisateur, comprenant également les étapes consistant à :
recevoir, par le nœud de réseau d'accès, une demande d'annexion ou une demande d'établissement de session provenant de l'équipement d'utilisateur ; et
envoyer, par le nœud de réseau d'accès, la demande d'annexion ou la demande d'établissement de session au nœud de commande, afin que le nœud de commande attribue l'identifiant de session à l'équipement d'utilisateur.

6. Nœud de réseau d'accès, comprenant des moyens configurés pour l'exécution des étapes selon l'une quelconque des revendications 1 à 5.

7. Système d'émission de paquets (100), comprenant le nœud de réseau d'accès selon la revendication 6, et un équipement d'utilisateur (12) et un dispositif d'expédition (14) qui sont tous deux connectés au nœud de réseau d'accès.

8. Système selon la revendication 7, le système comprenant également un nœud de commande connecté au nœud de réseau d'accès.
